# EUROPEAN PATENT APPLICATION

(11) **EP 4 764 160 A1**
(43) Date of publication of application: **24.06.2026**
(21) Application number: 24461646.2
(22) Date of filing: 17.12.2024
(51) Int. Cl.: F01D 5/18, F01D 5/20

(54) **A TURBINE BLADE**

(71) Applicant: GE Aerospace Poland Sp. z o.o., 02-256 Warsaw (PL)
(72) Inventor: Bulsiewicz, Tomasz, 02-639 Warszawa (PL); Stanczyk, Maciej Micha, 01-389 Warszawa (PL); Wojciechowski, Micha, 03-982 Warszawa (PL); Kruszczynski, Krzysztof, 02-495 Warszawa (PL)
(74) Representative: Kuczynska, Teresa

(57) **Abstract**

A turbine blade having a dovetail (7) and an airfoil (2) extending therefrom and having a tip (8) with a squealer cavity (9) formed therein, a leading edge (3) and a trailing edge (4) which are located opposite to each other, and a pressure side (6) and a suction side (5) which are opposite to each other and extend between the leading edge (3) and the trailing edge (4);
wherein the turbine blade comprises an internal cooling system arranged in an internal space defined between the pressure side (5) the suction side (6), the trailing edge (4) and the leading edge (3); the internal cooling system comprising a serpentine second cooling passage (21) extending through the dovetail (7) and the airfoil (2) and having a second inlet (23) disposed in the dovetail (7), longitudinal first, second and third subpassages (21a, 21b, 21c) extending preferably through the entire extension of the airfoil (2) and successively connected with each other by turns being arched parts of the second cooling passage (21) and at least one second tip cooling hole (14) exiting in the squealer cavity (9) of the tip (8) and connected to an end of one of the first, second and third subpassage (21a, 21b, 21c);
the cooling system further comprising a vertical row of third cooling holes (13) connected to the second cooling passage (21) and located in the area of trailing edge (4) of the airfoil (2);
**is characterized in that**
in the tip (8), in the vicinity of the trailing edge (3) at least one ventilation hole (16) is arranged, which is connected to the second cooling passage (21) and inclined with respect to the top surface of the tip (8) towards the trailing edge (4), for cooling a corner area formed by the tip (8) and the trailing edge (4) of the airfoil (2).

## Description

### TECHNICAL FIELD

Present technical solution is generally related to a cooling system for gas turbine engines, more specifically to gas turbine engines comprising a high pressure turbine, and even more specifically to engines generally provided with first stage turbine blades. Furthermore, this solution comprises an enhanced internal cooling system for cooling an airfoil portion of a turbine blade, more specifically of the first stage turbine blade.

Furthermore, this solution is suitable for different sizes of turbine engines, preferably for small engines.

### BACKGROUND

Gas turbine engines typically comprise a rotor assembly, a compressor, and turbines, usually a high pressure turbine and a low pressure turbine. Gas turbine engines usually comprise also a rotor shaft, which is responsible for transferring power and rotary motion from the turbines to both the compressor and the rotor assembly. The compressor includes several stages of compressor blades and compressor vanes. In each stage, compressor blades and vanes are placed in a rotor disk and a stator respectively, extending radially with respect to the rotor shaft. Function of the compressor blades and vanes is to pressurize air that is subsequently mixed with fuel in a combustion chamber. In the combustion chamber hot combustion gases are generated, which flow downstream through corresponding turbines. Such turbines refer to a high pressure turbine and a low pressure turbine. The high pressure turbine, being arranged directly downstream of the combustion chamber, extracts energy from the combustion gases for powering the compressor. The low pressure turbine, being arranged downstream of the high pressure turbine, extracts additional energy from the combustion gases for producing output work used to power an upstream fan, e.g., in an aircraft turbofan engine, or to operate as a power turbine drive, e.g., a turboprop propeller or a helicopter rotor. Both turbines generally consist of turbine stages, which in turn comprise a stator and a rotor with respective airfoils. In the high pressure turbine, the rotor comprises a rotor disk comprising a row of blades arranged radially, whereas the stator comprises vanes extending radially outward from said stator. The turbine airfoils are generally designed to receive a direct flow of the combustion gases and redirect said flow further in proper flow path. The rotor blades and the corresponding stator vanes cooperate for extracting energy from the combustion gases for rotating the supporting rotor disks, which in turn are joined by a corresponding shaft to the compressor rotor for rotating the corresponding blades thereof.

These engine components define an annular flow path extending through the corresponding rows of the nozzle vanes and rotor blades. Since the combustor generates the combustion gases at high temperature, the various components defining said flow path have to be properly cooled during operation. Due to the extreme environment in which such components operate, such cooling is especially needed to ensure required operational life of the hot section components, in the high pressure turbine and the gas turbine engine, as a whole. Since the first stage turbine blades of the high pressure turbine receive the hottest combustion gases, said blades have to be specifically designed for enhanced cooling operation, typically using a portion of air bled from the compressor for cooling.

Such a turbine engine component, i.e. a turbine blade, comprises an airfoil. The airfoil is defined by a top edge and a bottom edge and by a leading edge and a trailing edge. Bottom edge extends between a leading edge, as the front edge of the airfoil, and a trailing edge, as the rear edge of the airfoil, along the flow path of the combustion gas. Also, such an airfoil includes two walls, wherein one of them is the airfoil pressure side, and the other one, on the opposite side, as the airfoil suction side.

Further, as mentioned above, such turbine engine component, i.e. the turbine blade, is provided with an internal cooling system. The internal cooling system is defined by features related to a cooling fluid flow passage. The cooling fluid flow passage is designed to guide a cooling fluid through the most heated parts of the turbine blade. The turbine blade cooling air system generally comprises radial passages through which a cooling fluid, such as air bled from a compressor, flows to cool down corresponding most heated regions of the airfoil, for example, a vertically placed leading edge region, a mid-chord region, a trailing edge region and a horizontally arranged tip edge region.

Document US 11,021,961 B2 discloses a rotor assembly including an airfoil assembly and a hub to which the airfoil assembly is attached. A wall assembly defines a first cavity and a second cavity between the airfoil assembly and the hub. The first cavity and the second cavity are at least partially fluidly separated by the wall assembly. The first cavity is in fluid communication with a flow of first cooling fluid and the second cavity is in fluid communication with a flow of second cooling fluid different from the first cooling fluid.

Document US 2009/0317234 B2 discloses a turbine airfoil including pressure and suction sidewalls extending axially in chord between opposite leading and trailing edges. The sidewalls are spaced transversely apart to define cooling flow channels extending longitudinally and separated chordally by partitions bridging the sidewalls.

Known turbine blades include internal cooling systems having sets of extract holes for cooling different parts of the blade, among others the tip of the blade. However, with regard to small engines in which, due to dimensions of the blades, there are some areas of the blade, especially in the tip region, which are subject to an extensive wear due to a high temperature.

As gas turbine engines operates in different environments, often under extreme conditions, such as high temperatures, like in Middle East or North Africa, it is crucial to deliver the highest reliability and long cycle life of such a gas turbine and its components against harsh thermal conditions. As mentioned above, reliability and long cycle life of the gas turbine components depend on, i.e., effective cooling properties and requirements. Such requirements, with respect to the present technical solution, are to provide appropriate cooling the afore-mentioned turbine blade, wherein said turbine blade needs to withstand high temperatures of the gases flowing from the combustion chamber as well as the severe thermal environment.

The object of this technical solution is to provide cooling architecture for a turbine blade, especially for a high pressure turbine blade in a high pressure turbine section of a gas turbine engine, within safe temperature limits and with cooling achieved using lesser amount of pressurized cooling fluid.

Yet another purpose of such a technical solution is to provide a turbine blade with simple and economical design, which fulfills cooling requirements, especially of the tip region of the blade in small engines.

A turbine blade, according to the invention, has a dovetail and an airfoil extending therefrom and has a tip with a squealer cavity formed therein, a leading edge and a trailing edge which are located opposite to each other, and a pressure side and a suction side which are opposite to each other and extend between the leading edge and the trailing edge; wherein the turbine blade comprises an internal cooling system arranged in an internal space defined between the pressure side the suction side, the trailing edge and the leading edge; the internal cooling system comprising a serpentine second cooling passage extending through the dovetail and the airfoil and having a second inlet disposed in the dovetail, longitudinal first, second and third subpassages extending preferably through the entire extension of the airfoil and successively connected with each other by turns being arched parts of the second cooling passage and at least one second tip cooling hole exiting in the squealer cavity of the tip and connected to an end of one of the first, second and third subpassage; the cooling system further comprising a vertical row of third cooling holes connected to the second cooling passage and located in the area of trailing edge of the airfoil;
characterizing in that in the tip, in the vicinity of the trailing edge at least one ventilation hole is arranged, which is connected to the second cooling passage and inclined with respect to the top surface of the tip towards the trailing edge, for cooling a corner area formed by the tip and the trailing edge of the airfoil.

In a preferred embodiment, in the tip, in the vicinity of the trailing edge, a groove is arranged forming an extension of the cavity, which is connected to the squealer cavity, wherein at least one ventilation hole is arranged in the groove.

In a preferred embodiment, the internal cooling system comprises further a longitudinal first cooling passage, separate from the second cooling passage and extending through the dovetail and the airfoil, located near the leading edge of the airfoil and having a first inlet in the dovetail and at least one first tip cooling hole in the squealer cavity of the tip.

In a preferred embodiment, in the first and second cooling passages turbulators are provided.

In a preferred embodiment, the cooling system further comprising at least one vertical row of first cooling holes connected to the first cooling passage and located along the leading edge.

In a preferred embodiment, the second inlet of the second cooling passage is located in the vicinity of the trailing edge and connected with the first subpassage.

In a preferred embodiment, the squealer cavity is provided with a plurality of the first and second tip cooling holes connected with each of the first and second cooling passages.

In a preferred embodiment, in the dovetail an additional supply hole is arranged, which is connected with a turn between the second subpassage and third subpassage of the second cooling passage (21).

In a preferred embodiment, the turbulators are inclined by an angle in the range from about 30° to about 90° with respect to a longitudinal direction of the first and/or second cooling passages, preferably 60°.

In a preferred embodiment, the tip cooling holes are perpendicular to a bottom surface of the squealer cavity.

In a preferred embodiment, the cooling system further comprises at least one row of cooling holes connected to the first and/or second cooling passages and located on the pressure side, near the tip of the airfoil.

In a preferred embodiment, the cooling system further comprises at least one row of the second cooling holes connected to the first cooling passage and located on the suction side.

In a preferred embodiment, the cooling system further comprises at least one row of the second cooling holes connected to the second cooling passage and located on the suction side.

In a preferred embodiment, at least one row of the second cooling holes is located near the leading edge of the airfoil.

In a preferred embodiment, the second cooling holes are inclined with respect to a longitudinal direction of the first and/or second cooling passages.

In a preferred embodiment, the first cooling holes are arranged in two rows, wherein the first row of the first cooling holes is arranged on the suction side close to a stagnation zone of the leading edge, and the second row of the first cooling holes is arranged on the pressure side close to the stagnation zone of the leading edge of the airfoil.

In a preferred embodiment, the first cooling holes are inclined with respect to a longitudinal direction of the cooling passages.

In a preferred embodiment, the tip cooling holes are located in the vicinity the leading edge.

### BRIEF DESCRIPTION OF THE DRAWINGS

Features and advantages of the subject matter disclosed herein will be better understood with respect to the following detailed description of this technical solution, provided with reference to the accompanying drawings, in which:
FIG. 1 is a perspective view of a turbine blade according to the aspects of present disclosure, seen from a pressure side;
FIG. 2 is a perspective view of a turbine blade according to the aspects of present disclosure, seen from a suction side;
FIG. 3 is a top perspective view of a turbine blade according to the aspects of present disclosure;
FIG. 4 is a bottom view of a turbine blade according to the aspects of present disclosure;
FIG. 5 is a cross-section view of an internal cooling system of a turbine blade according to the aspects of the present disclosure, taken along line B-B, as shown in FIG. 3;
FIG. 6 is a cross-section view of an internal cooling system of a turbine blade, as shown in FIG. 5 showing schematically flow of the cooling fluid in the turbine blade;
FIG. 7 is a cross-section view of an internal cooling system of a turbine blade according to the aspects of the present disclosure, taken along line A-A, as shown in FIG. 3.

### DETAILED DESCRIPTION

It should be noted that formulations used herein, such as "top", "bottom", "vertical", "horizontal" refer to the orientation of the described elements as shown in the drawings.

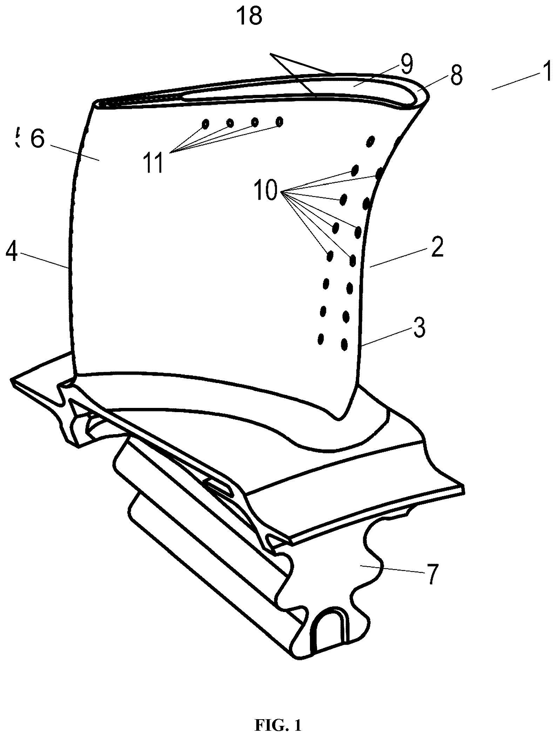

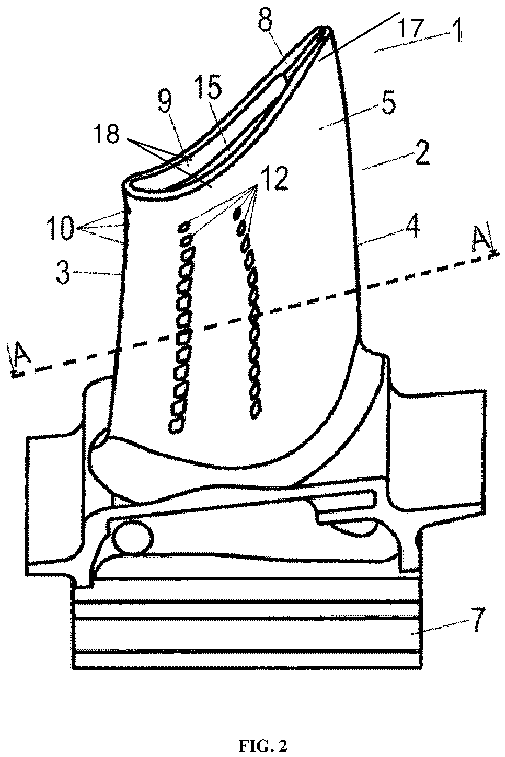

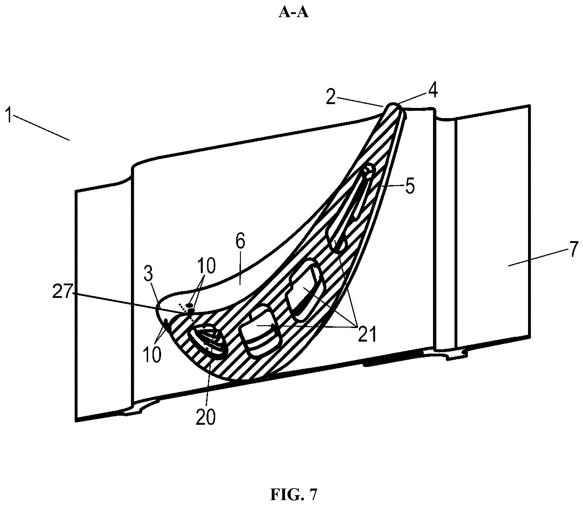

According to the preferred embodiment of the invention, a first stage turbine blade 1 for use in a gas turbine engine is shown in FIGS. 1 to 7. As illustrated in FIGS., the turbine blade 1 comprises generally a dovetail 7 and an airfoil 2 extending from the dovetail 7. The dovetail 7 forms a base for the airfoil 2. The airfoil 2 comprises a tip 8, defining the top of said airfoil 2, wherein the tip 8 is arranged opposite to the dovetail 7. The tip 8 is provided at the top of the airfoil 2 to form a seal between the turbine blade 1 and an outer shroud of the turbine casing (not shown). According to the present technical solution, the tip 8 of the turbine blade 1 comprises a squealer cavity 9 formed therein and extending between the inner sides of walls 18 of the airfoil 2 having a certain depth, as shown in FIGS. 1 and 2. The squealer cavity 9 is a type o seal and is formed preferably to receive outlets of extract holes for cooling the tip 8 of the blade region. Additionally, the airfoil 2 of the turbine blade 1 generally comprises two outermost edges, defining therebetween a pressure side 6 and a suction side 5 of the airfoil 2, wherein a vertical outermost front edge of the airfoil 2 is a leading edge 3 and a vertical outermost rear edge is a trailing edge 4, as shown in FIGS. 1 to 3.

The object of the present technical solution is to provide effective cooling structure for the turbine blade 1, wherein the turbine blade 1 is cooled by use of a cooling fluid, i.e. a coolant. Such a coolant preferably is pressurized cooling air. The turbine blade 1 is provided with an internal cooling system for receiving and redirecting the cooling fluid in an appropriate way to provide an effective cooling flow within the inner walls of the turbine blade 1. Such internal cooling system comprises also several sets of cooling fluid extract holes for releasing the cooling fluid from the internal cooling system of the turbine blade 1.

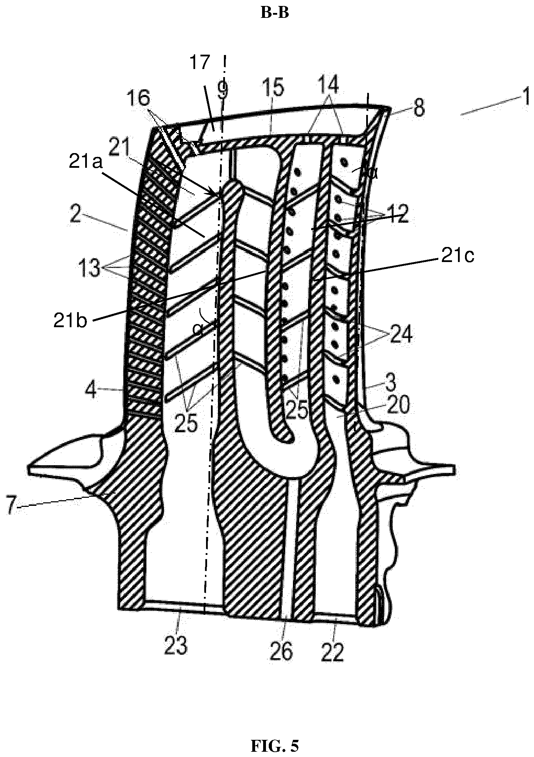

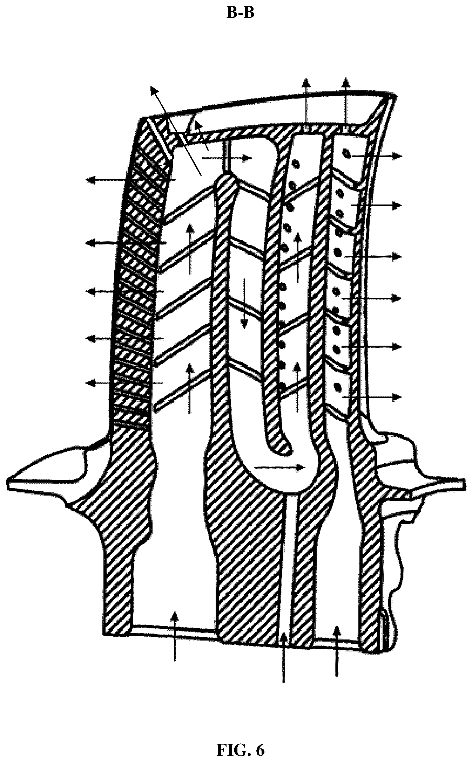

According to the present technical solution, the afore-mentioned internal cooling system is arranged integrally within the turbine blade 1, in an internal space defined between the pressure side 6, the suction side 5, the trailing edge 4 and the leading edge 3. Said integral internal cooling system comprises cooling features arranged suitably to cool proper areas of the turbine blade 1. The first cooling feature of the internal cooling system is an internal cooling passageway. According to the present technical solution, the integral cooling passageway comprises an elongated internal first cooling passage 20 and a serpentinous internal second cooling passage 21, which are separate and independent from each other, as shown in FIG. 5 and 6. The first cooling passage 20 is arranged for providing cooling in a region of the leading edge, all along the leading edge 3 of the airfoil 2. The second cooling passage 21 is arranged within the turbine blade 1 in a shape of a serpentine, between the trailing edge 4 and the leading edge region. The second cooling passage 21 comprises a plurality of internal elongated subpassages, e.g. a first, a second and a third subpassage 21a, 21b, 21c, connected in sequence by turns, which are arched parts of the second cooling passage 21 as shown in FIG. 5. The first subpassage 21a is arranged adjacent to the trailing edge 4, the second subpassage 21b is arranged next to the first subpassage 21a of the second cooling passage 21, whereas the third subpassage 21c is arranged adjacent to the first cooling passage 20, as shown in FIG. 5. The second cooling passage 21 is partially located within the dovetail 7 of the turbine blade 1, as shown in FIG. 5. The second cooling passage 21 provides, therefore, cooling for a mid-chord area of the airfoil 2, a trailing edge region and the part of the dovetail 7.

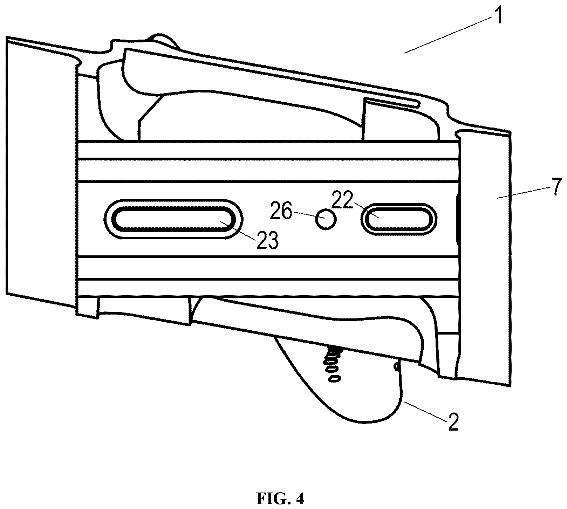

The afore-mentioned leading edge region is one of the hottest parts of the airfoil 2 because of its exposure to hot gases flowing from the combustion chamber of an engine. The leading edge 3 has a stagnation zone 27 being a virtual line where heat transfer is the highest. Therefore, the leading edge region requires specific treatment in terms of cooling process. To provide required cooling to this region, according to the embodiment of the present technical solution, the first cooling passage 20 is arranged in the airfoil 2. The first cooling passage 20 comprises an inlet 22 arranged in the bottom of the dovetail 7, proximate to the leading edge 3, for entering the cooling fluid, as shown in FIGS. 4 and 5. The first cooling passage 20 extends along the leading edge 3 to the tip 8 of the turbine blade 1. The first cooling passage 20 comprise a plurality of turbulators 24 placed on the surface of the first cooling passage 20. The turbulators 24 are disposed across a width of the first cooling passage 20, looking in the direction from the trialing edge 4 towards the leading edge 3. Such turbulators 24 are configured to provide designed level of turbulence in the cooling fluid flow in the first cooling passage 20. As shown on FIG. 5, the turbulators 24 extend up from the side of the leading edge 3 (stagnation zone 27) towards the tip 8 in a staggered configuration between pressure side 6 and suction side 5 and are arranged radially outward on pressure and suction side at an angle α in the range from about 30° to about 90° in relation to a longitudinal direction of the first cooling passage 20, corresponding to a direction of flow of the cooling fluid. Preferably the angle α equals 60°, as shown in FIG. 5 and 6, to enhance further the heat transfer.

Furthermore, the afore-mentioned region of the airfoil 2 in the vicinity of the trailing edge 4 comprises an area, design of which is associated with high thermal loading for equalizing temperature gradients in the mid chord of the turbine blade 1. As one of the purposes of the present technical solution is to unburden the mid-chord area of the turbine blade airfoil 2 exposed to high thermal loading, there is also need to provide higher heat extraction in the trailing edge region. As shown in FIGS, said region in the vicinity of the trailing edge 4 requires specific features, providing improved heat transfer in the mid portion of the turbine blade 1 and improved heat discharge. Therefore, the second cooling passage 21 is provided for such a purpose. The second cooling passage 21 comprises an inlet 23. The second cooling passage inlet 23 is arranged in the bottom of the dovetail 7, proximate to the trailing edge 4, and extends upward within said dovetail 7, as shown in FIG. 5. To intensify cooling effectiveness, the second cooling passage 21 is in a form of the serpentine comprising the first, second and third subpassages 21a, 21b, 21c, as mentioned above. The first, second and third subpassages 21a, 21b, 21c are in a fluid communication in series with each other's by use of turns. Preferably the serpentine turns of the second cooling passage 21 are arranged in the top area of the airfoil 2, below the tip 2, and in the dovetail 7 of the turbine blade 1, respectively, as shown in FIG. 5. As the first cooling passage 20, the second cooling passage 21 is also provided with turbulators 25, as shown in FIG. 5. The turbulators 25 located inside the first subpassage 21a extend up from the side of the trailing edge 4 towards the tip 8 in a staggered configuration between pressure side 6 and suction side 5. The turbulators 25 located inside the second subpassage 21b extend down from the side of the trailing edge 4 towards the dovetail 7 in a staggered configuration between pressure side 6 and suction side 5. The turbulators 25 located inside the third subpassage 21c extend up from the side of the trailing edge 4 towards the tip 8 in a staggered configuration between pressure side 6 and suction side 5. The turbulators 25 are arranged at an angle α in the range from about 30° to about 90° in relation to a longitudinal direction of the second cooling passage 21, corresponding to a direction of flow of the cooling fluid. Preferably the angle α equals 60°, as shown in FIG. 5, to enhance further the heat transfer. Moreover, in addition to unburden said mid portion of the turbine blade 1, according to the present solution, a additional supply hole 26 is provided in a fluid communication with the second cooling passage 21, as shown in FIG. 5. Preferably the additional supply hole 26 is arranged between the second and third subpassages 21b, 21c, and extends from the dovetail 7 to the corresponding serpentine turn, as shown in FIG. 5. The additional supply hole 26 is configured to inject fresh (i.e. additional) cooling fluid for further reduction of temperatures and thermal gradients in the mid-chord area of the turbine blade 1.

The first and second cooling passages 20, 21 and shapes, sizes and arrangement of the turbulators 24, 25 within said first and second cooling passages 20, 21 are arranged to enhance further internal heat transfer, while maintaining sufficient pressurization inside the first and second cooling passages 20, 21.

As shown in FIGS, the flow of the cooling fluid within the turbine blade 1, according to the aspects of the present technical solution, flows mostly through the first and the second cooling passages 20, 21, respectively. Preferably the cooling fluid is fed into the first and second cooling passages 20, 21 through the first and second cooling passage inlets 22, 23, respectively, and divided into the first and second flow of the cooling fluid, accordingly. The first flow of the cooling fluid enters the first cooling passage inlet 22 in the dovetail 7, and flows into the first cooling passage 20 with the tabulators 24, wherein the cooling fluid is swirled by said turbulators 24. Such a turbulent and swirled first flow of the cooling fluid provides high effective heat transfer within the leading edge region of the turbine blade 1. Moreover, it has to be indicated, that cooling of the leading edge region is crucial in the whole process of providing effective cooling to the whole turbine blade 1. Therefore, the first cooling passage 20 is independently fed with the cooling fluid to deliver said fluid specifically to the leading edge region of the turbine blade 1.

Focusing now on the second flow of the cooling fluid, said second flow enters the second cooling passage inlet 23, flows into the subpassages with turbulators 25 of the second cooling passage 21, wherein the cooling fluid is swirled by said turbulators 25. Such a turbulent and swirled second flow of the cooling fluid provides high effective heat transfer within the mid-chord portion and the trailing edge region of the turbine blade 1. The second flow of the cooling fluid is supported by feeding fresh cooling fluid through the additional supply hole 26, arranged as described above.

According to the present technical solution, the turbine blade internal cooling system requires to provide several sets of cooling fluid extract holes for discharging the cooling fluid from said internal cooling system.

Following that, according to the present technical solution, the suction side 5 of the airfoil 2 of the turbine blade 1 is provided with second cooling holes 12, as shown in FIG. 2, for extracting the cooling fluid from the turbine blade internal cooling system. The outlets of the second cooling holes 12 on the suction side 5 may be of different shapes and sizes, e.g. rectangular, trapezoidal. According to the present technical solution the outlets of the second cooling holes 12 have trapezoidal shape, as shown in FIG. 2. However, said outlets may have different polygon shape, such as square or rectangular, or even oval shape. For improving effectiveness and robustness in film cooling of the turbine blade 1, the second cooling holes 12 on the suction side 5 of the airfoil 2 are arranged in one or more vertical rows along the height (i.e. the span) of said airfoil 2. Preferably the second cooling holes 12 are arranged in the vicinity of the leading edge 3 of the turbine blade 1. More preferably, the second cooling holes 12 are arranged in two vertical rows along the height of said airfoil 2 and one of said rows is located closer to the leading edge 3 of the turbine blade 1 and is connected with the first cooling passage 20, while the second one is located in more distance from the leading edge 3 and is connected with the second cooling passage 21, as shown in FIGS. 2 and 5. Preferably, in order to lower pressure losses, the second cooling holes 12 are angled up or down in relation to the longitudinal directions of the first and second cooling passages 20, 21, depending on a direction of the airflow in the part of the first and second cooling passage 20, 21 with which they communicate, i.e. if the airflow in the passage part flows in the direction from the dovetail 7 to the tip 8, the second cooling holes 12 are angled up - their inlet openings are farther from the tip 8 than their outlet openings, and if the airflow in the passage part flows in the direction from the tip 8 to the dovetail 7, the second cooling holes 12 are angled down - their inlet openings are closer to the tip 8 than their outlet openings.

Alternatively and/or additionally, the pressure side 6 of the airfoil 2 of the turbine blade 1 may be provided with pressure side cooling holes (not shown in FIGS) for extracting the cooling fluid from the turbine blade internal cooling system. Analogously to the second cooling holes 12, for improving effectiveness and robustness in film cooling of the turbine blade 1, the pressure side cooling holes on the pressure side 6 of the airfoil 2 are arranged in one or more vertical rows along the height of said airfoil 2. Preferably the pressure side cooling holes are arranged proximate to the leading edge 3 of the turbine blade 1. Preferably the pressure side cooling holes are also angled in relation to the longitudinal directions of the first or second cooling passages 20, 21 in a similar way as described with regard to the second cooling holes 12. The pressure side cooling holes may be of different shapes and sizes as mentioned with regards to the second cooling holes 12.

The pressure side 6 of the turbine blade 1 further comprises tip cooling holes 11 arranged in one or more horizontal rows and proximate to the tip 8 of the airfoil 2, as shown in FIG. 1. The pressure side tip cooling holes 11 are provided for cooling the region of the tip of said turbine blade 1. The tip cooling holes 11 are in communication with the second cooling passage 21, more specifically with the ends of the first and second subpassages 21a, 21b connected by a corresponding serpentine turn in the vicinity of the tip 8, and with the end of the first cooling passage 20.

According to the present technical solution, a front region of the airfoil 2, especially its leading edge region, is provided with cylindrical first cooling holes 10 in communication with the first cooling passage 20 for cooling and extracting the cooling fluid in front of said airfoil 2. The first cooling holes 10 are arranged in one or more rows along the region of the leading edge of the airfoil 2 as well as in its vicinity on the pressure side and/or the suction side. Preferably the first cooling holes 10 are arranged in at least one row on the leading edge 3 of the airfoil 2 and extending along the height of said airfoil 2. Preferably, there may be a second row of the first cooling holes 10 arranged on the pressure side 6 of the airfoil 2 close to the stagnation zone 27 of the leading edge 3, both rows being parallel and arranged along the height of said airfoil 2, as shown in FIG. 1. The first cooling holes 10 may be of different shapes and sizes. Preferably the first cooling holes 10 are cylindrical. Preferably the first cooling holes 10 are inclined with respect to the longitudinal direction of the first cooling passage 20 in a similar way as described with regard to the second cooling holes 12.

Preferably the cooling area of the region of the trailing edge region comprises third cooling holes 13 in communication with the first subpassage 21a. The third cooling holes 13 open exactly in trailing edge 4, which minimizes aerodynamic loses.

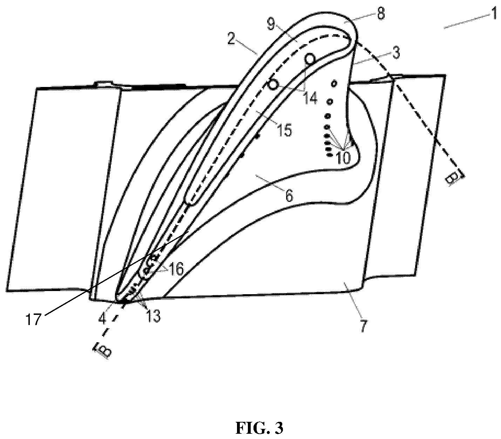

Due to aspects of technical solution disclosed herein, tip cooling holes 14 are provided for cooling the tip region of the turbine blade 1. The tip cooling holes 14 are arranged between the suction side 5 and the pressure side 6 of said airfoil 2, preferably exiting in the squealer cavity 9, as shown in FIG. 3, through a bottom surface 15 of the squealer cavity 9 between walls of the suction side 5 and the pressure side 6 of the airfoil 2 and are in communication with the second cooling passage 21, more specifically with the ends of the first and second subpassages 21a, 21b connected by a corresponding serpentine turn in the vicinity of the tip 8, with the end of the third subpassage 21c and with the end of the first cooling passage 20. Preferably the tip cooling holes 14 are arranged near the leading edge region of the airfoil 2. Beside the cooling function, the tip cooling holes 14 are also designed to extract the cooling fluid from the internal cooling system, more precisely from one or both first and second cooling passages 20, 21.

Moreover, according to the present solution, the tip 8 of the airfoil 2 is provided additionally with a groove 17 located near the corner of the airfoil 2 created by the tip 8 and the trailing edge 4 and connected with the squealer cavity 9. The groove 17 extends from the cavity 9 and is narrower and shallower than the cavity 9. The tip region of the airfoil 2 is also provided with ventilation holes 16 for extracting the cooling fluid from the second cooling passage 21. The ventilation holes 16 are arranged in the trailing edge region and are inclined with respect to the top surface of the tip 8 towards the trailing edge 4. Outlets of the ventilation holes 16 are located on the tip surface as well as within the concaved groove 17, as shown in FIG. 3. Such an arrangement of the ventilation holes 16 provide effective cooling to a corner area formed by the tip 8 and the trailing edge 4 of the airfoil 2 and prevents excessive loss of a turbine blade material in said region. Moreover, the squealer cavity 9 as well as the groove 17 prevents holes 14, 16 located in their bottoms from occlusion. Preferably, the width and depth of the groove 17 is equal or larger than the diameter of the hole 16.

All the above-mentioned cooling components and features of the turbine blade airfoil 2 located on the pressure side 6 and the suction side 5, within the leading edge region, the trailing edge region, the tip 8 and the dovetail 7 of the turbine blade 1 are configured to extract the cooling fluid from said turbine blade 1, as a part of the internal cooling process realized by the internal cooling system. Thus, according to the present technical solution, the cooling fluid bled from the compressor, after being fed into the first and second cooling passages 20, 21 through the corresponding inlets 22, 23, respectively, as shown in FIG. 6, and after flowing through said first and second cooling passages 20, 21, needs to be discharged out of the turbine blade 1. According to the present solution, as described above, the cooling fluid is divided into two separate flows. The first flow of the cooling fluid is fed by the inlet 22 of the first cooling passage 20 and flows within said first cooling passage 20. The second flow of the cooling fluid is fed by inlet 23 of the second cooling passage 21 and flows within said second cooling passage 21. The first flow of the cooling fluid is discharged through the first cooling holes 10 arranged along the leading edge 3 of the airfoil 2. The cooling fluid of the first flow is extracted towards an external stream of hot gases, which are essentially combustion gases driving the rotor blade, for cooling the leading edge region of the turbine blade 1 to prevent its overheating in that region. The first flow of the cooling fluid is also released through the tip cooling holes 14 for extracting said cooling fluid from the first cooling passage 20. The first flow of the cooling fluid is also discharged from the first cooling passage 20 through the second cooling holes 12 arranged on the suction side 5 of the airfoil 2 and being in a fluid communication with said first cooling passage 20. The second flow of the cooling fluid fed into the second cooling passage 21 is released through several exits. The second flow of the cooling fluid is discharged through the third cooling holes 13 arranged along the trailing edge 4 of the airfoil 2. Analogously, the cooling fluid of the second flow is extracted to the external stream of hot gases which are essentially combustion gases driving the rotor blade, as specified above, for cooling the trailing edge region of the turbine blade 1 to prevent its overheating in that region. The second flow of the cooling fluid is also discharged from the second cooling passage 21 through the second cooling holes 12 arranged on the suction side 5 of the airfoil 2 and being in a fluid communication with said second cooling passage 21. The second flow of the cooling fluid is discharged though the tip cooling holes 11 of the second cooling passage 21 to increase further effectiveness of cooling the tip region of the turbine blade 1. In one aspect of cooling the blade tip region, the second flow of the cooling fluid is discharged additionally through the tip cooling holes 14 for providing further cooling of said tip region. Moreover, the second flow of the cooling fluid is released though the ventilation holes 16 for cooling said tip region and cooling simultaneously the top area of the trailing edge region of the airfoil 2.

Identical elements or elements having the same function are provided with the same reference numbers in the figures, wherein only the elements essential for understanding of the present disclosure are shown, and the direction of flow of the media involved is designated schematically by arrows. Said arrows show generally flow of cooling fluid and its discharging out of the turbine blade 1. The arrows do not reflect exact angles of flow of the particular streams through passages and fluid extract holes.

### Reference numbers:

- [1] -: turbine blade
- [2] -: airfoil of the turbine blade
- [3] -: leading edge
- [4] -: trailing edge
- [5] -: suction side of airfoil
- [6] -: pressure side of airfoil
- [7] -: dovetail of a turbine blade
- [8] -: tip of the turbine blade
- [9] -: squealer cavity

- [10] -: first cooling hole
- [11] -: pressure side tip cooling hole

- [12] -: second cooling hole
- [13] -: third cooling hole
- [14] -: tip cooling hole
- [15] -: bottom surface of the squealer cavity of the tip
- [16] -: ventilation hole
- [17] -: groove
- [18] -: wall

- [20] -: first cooling passage
- [21] -: second cooling passage
- [21a] -: first subpassage
- [21b] -: second subpassage
- [21c] -: third subpassage
- [22] -: inlet of the first cooling passage
- [23] -: inlet of the second cooling passage
- [24] -: turbulators of the first internal cooling passage
- [25] -: turbulators of the second internal cooling passage
- [26] -: additional supply hole
- [27] -: stagnation zone
- [α] -: angle

## Claims

1. A turbine blade having a dovetail (7) and an airfoil (2) extending therefrom and having a tip (8) with a squealer cavity (9) formed therein, a leading edge (3) and a trailing edge (4) which are located opposite to each other, and a pressure side (6) and a suction side (5) which are opposite to each other and extend between the leading edge (3) and the trailing edge (4);
wherein the turbine blade comprises an internal cooling system arranged in an internal space defined between the pressure side (5) the suction side (6), the trailing edge (4) and the leading edge (3); the internal cooling system comprising a serpentine second cooling passage (21) extending through the dovetail (7) and the airfoil (2) and having a second inlet (23) disposed in the dovetail (7), longitudinal first, second and third subpassages (21a, 21b, 21c) extending preferably through the entire extension of the airfoil (2) and successively connected with each other by turns being arched parts of the second cooling passage (21) and at least one second tip cooling hole (14) exiting in the squealer cavity (9) of the tip (8) and connected to an end of one of the first, second and third subpassage (21a, 21b, 21c);
the cooling system further comprising a vertical row of third cooling holes (13) connected to the second cooling passage (21) and located in the area of trailing edge (4) of the airfoil (2);
**characterized in that**
in the tip (8), in the vicinity of the trailing edge (3) at least one ventilation hole (16) is arranged, which is connected to the second cooling passage (21) and inclined with respect to the top surface of the tip (8) towards the trailing edge (4), for cooling a corner area formed by the tip (8) and the trailing edge (4) of the airfoil (2).

2. The turbine blade according to claim 1, **characterized in that** in the tip (8), in the vicinity of the trailing edge (3), a groove (17) is arranged forming an extension of the cavity (9), which is connected to the squealer cavity (9), wherein at least one ventilation hole (16) is arranged in the groove (17).

3. The turbine blade according to one of the preceding claims, **characterized in that** the internal cooling system comprising further a longitudinal first cooling passage (20), separate from the second cooling passage (21) and extending through the dovetail (7) and the airfoil (2), located near the leading edge (3) of the airfoil (2) and having a first inlet (22) in the dovetail (7) and at least one first tip cooling hole (14) in the squealer cavity (9) of the tip (8).

4. The turbine blade according to one of the preceding claims, **characterized in that** in the first and second cooling passages (20, 21) turbulators (24, 25) are provided.

5. The turbine blade according to one of the preceding claims, **characterized in that** the cooling system further comprising at least one vertical row of first cooling holes (10) connected to the first cooling passage (20) and located along the leading edge (3).

6. The turbine blade according to one of the preceding claims, **characterized in that** the second inlet (23) of the second cooling passage (21) is located in the vicinity of the trailing edge (4) and connected with the first subpassage (21a).

7. The turbine blade according to one of the preceding claims, **characterized in that** the squealer cavity (9) is provided with a plurality of the first and second tip cooling holes (14) connected with each of the first and second cooling passages (20, 21).

8. The turbine blade according to one of the preceding claims, **characterized in that** in the dovetail (7) an additional supply hole (26) is arranged, which is connected with a turn between the second subpassage (21b) and third subpassage (21c) of the second cooling passage (21).

9. The turbine blade according to the claim 4, **characterized in that** the turbulators (24, 25) are inclined by an angle (α) in the range from about 30° to about 90° with respect to a longitudinal direction of the first and/or second cooling passages (20, 21), preferably 60°.

10. The turbine blade according to one of the preceding claims, **characterized in that** the tip cooling holes (14) are perpendicular to a bottom surface of the squealer cavity (9).

11. The turbine blade according to one of the preceding claims, **characterized in that** the cooling system further comprises at least one row of cooling holes (11) connected to the first and/or second cooling passages (20, 21) and located on the pressure side (6), near the tip (8) of the airfoil (2).

12. The turbine blade according to one of the preceding claims, **characterized in that** the cooling system further comprises at least one row of the second cooling holes (12) connected to the first cooling passage (20) and located on the suction side (5).

13. The turbine blade according to one of the preceding claims, **characterized in that** the cooling system further comprises at least one row of the second cooling holes (12) connected to the second cooling passage (21) and located on the suction side (5).

14. The turbine blade according to the claim 12, **characterized in that** at least one row of the second cooling holes (12) is located near the leading edge (3) of the airfoil (2).

15. The turbine blade as claimed in the claim 12-14, **characterized in that** the second cooling holes (12) are inclined with respect to a longitudinal direction of the first and/or second cooling passages (20, 21).

16. The turbine blade according to the claim 5, **characterized in that** the first cooling holes (10) are arranged in two rows, wherein the first row of the first cooling holes (10) is arranged on the suction side (5) close to a stagnation zone (27) of the leading edge (3), and the second row of the first cooling holes (10) is arranged on the pressure side (6) close to the stagnation zone (27) of the leading edge (3) of the airfoil (2).

17. The turbine blade according to the claim 5 or 16, **characterized in that** the first cooling holes (10) are inclined with respect to a longitudinal direction of the cooling passages (20, 21).

18. The turbine blade according to one of the preceding claims, **characterized in that** the tip cooling holes (14) are located in the vicinity the leading edge (4).
